# EUROPÄISCHE PATENTSCHRIFT

(11) **EP 3 573 854 B1**
(45) Veröffentlichungstag und Bekanntmachung des Hinweises auf die Patenterteilung: **07.04.2021**
(21) Anmeldenummer: 18701130.9
(22) Anmeldetag: 11.01.2018
(51) Int. Cl.: B60K 35/00, B60K 37/06, G06F 3/00, G06F 3/01

(54) **VERFAHREN ZUM BETREIBEN EINES BEDIENSYSTEMS, BEDIENSYSTEM UND FAHRZEUG MIT EINEM BEDIENSYSTEM**
METHOD FOR OPERATING A CONTROL SYSTEM, CONTROL SYSTEM AND VEHICLE WITH A CONTROL SYSTEM
PROCÉDÉ DE FONCTIONNEMENT D'UN SYSTÈME DE COMMANDE ACTIONNÉ, SYSTÈME DE COMMANDE ET VÉHICULE AVEC UN SYSTÈME DE COMMANDE

(30) Priorität: 26.01.2017 DE 102017201236
(43) Veröffentlichungstag der Anmeldung: 04.12.2019
(73) Patentinhaber: Volkswagen Aktiengesellschaft, 38440 Wolfsburg (DE)
(72) Erfinder: WENGELNIK, Heino, 38442 Wolfsburg (DE)
(86) Internationale Anmeldenummer: PCT/EP2018/050696
(87) Internationale Veröffentlichungsnummer: WO 2018/137939

(56) Entgegenhaltungen:
- EP-A1- 3 106 343
- WO-A1-2015/074771
- DE-A1-102013 226 682
- DE-A1-102015 006 613
- US-A1- 2006 047 386
- US-A1- 2013 265 229

## Beschreibung

Die vorliegende Erfindung betrifft ein Verfahren zum Betreiben eines Bediensystems, ein Bediensystem sowie ein Fahrzeug mit einem Bediensystem.

Die Verankerung einer Fülle elektronischer Einrichtungen im Alltag vieler Nutzer führt zu einem großen Bedarf an Möglichkeiten, Informationen anzuzeigen und dem Nutzer eine Bedienung zu ermöglichen. Dies erfolgt insbesondere mithilfe von Displays, die mittlerweile aufgrund von sinkenden Kosten und Fortschritten bei der technischen Entwicklung häufig eingesetzt und oft groß dimensioniert werden. In Kombination mit einer berührungsempfindlichen Oberfläche werden sogenannte Touchscreens in vielen Bereichen zur Erfassung von Nutzereingaben verwendet.

Beispielsweise werden, um verschiedene elektronische Einrichtungen bedienen zu können, vielfach Multifunktionsbediensysteme eingesetzt, welche eine oder mehrere Multifunktionsanzeigen und Bedienelemente umfassen, mit denen die Einrichtungen bedient werden können. Die Bedienung wird dabei durch die auf der Multifunktionsanzeige wiedergegebene Information unterstützt beziehungsweise geführt. Ferner kann über ein solches Bediensystem ausgewählt werden, welche Informationen auf der Multifunktionsanzeige angezeigt werden sollen.

Vor allem die Größe moderner Displays geht jedoch mit spezifischen Herausforderungen einher, etwa wenn es dem Nutzer schwerer fällt, sich auf der Anzeigefläche zu orientieren und die relevanten Informationen schnell zu finden oder wenn die Hand des Nutzers bei der Bedienung eines großen Touchscreens frei über einer relativ großen Fläche schwebt.

Ferner stellt sich in bestimmten Einsatzbereichen von Bediensystemen die Herausforderung, dass ein Nutzer nur eine beschränkte Aufmerksamkeit auf die Bedienung richten kann. Beispielsweise soll der Fahrer eines Fahrzeugs möglichst wenig von der Beobachtung des umgebenden Verkehrs und dem Führen des eigenen Fahrzeugs abgelenkt werden.

Die DE 10 2014 222 528 B4 schlägt eine Rückhaltegurt für einen Fahrzeuginsassen vor, der eine Sensorschicht aufweist, durch die Eingaben erfasst werden können. Der Gurt weist ferner ein Substrat mit einer veränderbaren Haptik auf, die vom Nutzer durch Vertiefungen und/oder Erhebungen spürbar ist. Dadurch wird dem Nutzer während der Bedienung eine Rückmeldung gegeben, ohne dass ein visueller Kontakt notwendig ist.

Bei dem in der DE 10 2013 001 323 B3 vorgeschlagenen Kraftfahrzeug mit einer Kommunikationseinrichtung ist ein Sicherheitsgurt mit einer Vibrationseinrichtung vorgesehen. Beim Aufbau einer Kommunikationsverbindung wird ein Vibrationsvorgang ausgelöst.

Das in der DE 10 2014 201 037 A1 beschriebenen Verfahren zur Übertragung von Informationen an den Fahrer eines Fahrzeugs sieht vor, dass eine haptische Feedback-Einheit angesteuert wird. Die haptische Feedback-Einheit ist dabei auf einer Oberfläche eines Eingabegeräts zur Steuerung des Fahrzeugs, zum Beispiel eines Lenkrads, angeordnet.

Die DE 10 2013 226 012 A1 beschreibt ein Verfahren zur Steuerung einer Funktion in einem Fahrzeug. Dabei wird eine Berührung einer Oberfläche durch einen Finger erfasst. Die Oberfläche umfasst eine haptische Feedback-Einheit, durch die die Oberfläche verändert werden kann, um spürbare Barrieren an der Position des Fingers zu erzeugen und damit analoge Bedienelemente nachzuahmen.

Das in der US 2014/0180595 A1 beschriebene Fitnessarmband kann beispielsweise mittels Vibrationen mit einem Nutzer interagieren sowie eine haptische Rückmeldung ausgeben. Beispielsweise kann das Armband durch eine Vibration mitteilen, dass der Nutzer eine bestimmte Zielvorgabe erreicht hat. Durch das Armband können ferner Gesten als Eingaben erfasst werden.

Die EP 3 106 343 A1 beschreibt ein gestenbasiertes Eingabegerät zur Steuerung einer Fahrzeugelektronik, bei dem eine Kamera Handgesten eines Nutzers erfasst und über einen in einer Armlehne eingebauten Aktuator eine Vibrationsrückmeldung erzeugt wird. D1 beschreibt zwar, dass die Eingabeeinheit über einen Druckknopf oder über eine Geste aktiviert werden kann.

Die DE 10 2015 006613 A1 beschreibt ein Bediensystem und ein Verfahren zum Betreiben eines Bediensystems für ein Kraftfahrzeug mittels einer Gestensteuerung, die beispielsweise von einem Kamerasystem erfasst werden kann. Es ist auch eine Signalvorrichtung vorgesehen, welche dem Nutzer optische oder akustische Rückmeldungen über die Erfassung eines Körperteils bzw. einer Geste vermittelt.

Es ist daher die Aufgabe der vorliegenden Erfindung, ein Verfahren zum Betreiben eines Bediensystems, ein Bediensystem sowie ein Fahrzeug mit einem Bediensystem bereitzustellen, die einem Benutzer eine besonders einfache und sichere Bedienung ermöglichen. Erfindungsgemäß wird diese Aufgabe durch ein Verfahren mit den Merkmalen des Anspruchs 1, ein Bediensystem mit den Merkmalen des Anspruchs 12 und ein Fahrzeug mit den Merkmalen des Anspruchs 14 gelöst. Vorteilhafte Ausgestaltungen und Weiterbildungen ergeben sich aus den abhängigen Ansprüchen.

Bei dem erfindungsgemäßen Verfahren wird in einem Erfassungsbereich einer Erfassungseinheit eine Bedienhandlung eines Nutzers erfasst. Anhand der erfassten Bedienhandlung werden Rückmeldungsdaten erzeugt und an eine Rückmeldungsvorrichtung übertragen. Durch die Rückmeldungsvorrichtung wird anhand der Rückmeldungsdaten in einem Übertragungsbereich ein haptisch wahrnehmbares Ausgabesignal ausgegeben, wobei der Übertragungsbereich und der Erfassungsbereich voneinander beabstandet angeordnet sind. Die erfasste Bedienhandlung umfasst ein Eintreten eines Betätigungsobjekts in einen Annäherungsbereich, wobei der Annäherungsbereich einen Raum in einer Umgebung eines Bedienelements umfasst.

Dadurch kann dem Nutzer eine haptisch wahrnehmbare Rückmeldung zu der erfassten Bedienhandlung ausgegeben werden. Die Bedienung erfolgt daher mit besonders großer Sicherheit, da der Nutzer die jeweilige Rückmeldung wahrnehmen kann, ohne seine Aufmerksamkeit beispielsweise auf eine weitere Ausgabeeinheit richten zu müssen.

Die Erfindung erlaubt es zudem, ein haptisch wahrnehmbares Ausgabesignal zu erzeugen, auch wenn Eigenschaften der Erfassungseinheit eine Integration einer solchen Rückmeldung in die Erfassungseinheit erschweren. Beispielsweise ist es bei der Verwendung von Vibrationen als haptische Rückmeldung wünschenswert, große Beschleunigungen und hohe Frequenzen zu erzeugen, um ein möglichst "scharfes" Signal erzeugen zu können. Dies ist beispielsweise bei größeren Touchscreens, welche eine entsprechend hohe Masse aufweisen, mit Herausforderungen verbunden. Die Erfindung erlaubt nun eine Trennung der Erfassungseinheit von der Rückmeldungsvorrichtung, die das haptisch wahrnehmbare Ausgabesignal ausgibt, sodass beschränkte Ausgabemöglichkeiten durch weitere Elemente des Bediensystems erweitert werden können.

Die Erfassung der Bedienhandlung erfolgt dabei auf an sich bekannte Weise, wobei Bedienhandlung unterschiedlicher Typen vorgesehen sein können. Die Erfassungseinheit umfasst dazu einen Sensor, durch den in dem Erfassungsbereich eine Handlung des Nutzers, insbesondere mittels eines Betätigungsobjekts, detektiert werden kann. Insbesondere wird die detektierte Handlung anschließend ausgewertet, es wird eine Bedienintention bestimmt und ein Steuersignal erzeugt.

Der Erfassungsbereich kann ebenso auf verschiedene Weisen gebildet sein, um eine Erfassung von verschiedenen Typen von Bedienhandlungen zu ermöglichen. Insbesondere kann der Erfassungsbereich zweidimensional oder dreidimensional ausgebildet sein. Bei einem zweidimensionalen Erfassungsbereich werden Bedienhandlungen entlang einer bestimmten Fläche, insbesondere einer Oberfläche erfasst. Bei einem dreidimensionalen Erfassungsbereich können ferner Bedienhandlungen in einem Raumvolumen erfasst werden, wobei ferner Bedienhandlungen entlang einer Fläche umfasst sein können.

Der Erfassungsbereich ist insbesondere durch den Sensor der Erfassungseinheit definiert, beispielsweise ein zweidimensionaler Erfassungsbereich bei einer berührungsempfindlichen Oberfläche der Erfassungseinheit oder ein dreidimensionaler Erfassungsbereich bei einem Kamerasensor. Zudem können Bedienhandlungen ein Betätigen eines Schalters, etwa eines Tast- oder Kippschalters oder eines Reglers, umfassen, wobei insbesondere der Schalter oder Regler einen Sensor zur Detektion der Bedienhandlung umfasst.

Bei einer Ausbildung der Erfindung wird die Bedienhandlung mittels einer berührungsempfindlichen Oberfläche und/oder einer Kamera erfasst. Die Erfassung kann dadurch vorteilhafterweise besonders einfach erfolgen, wobei Mittel der Detektion genutzt werden, die bereits häufig eingesetzt werden.

Beispielsweise kann die Erfassung der Bedienhandlung anhand resistiver und/oder kapazitiver Flächen erfolgen. Die Erfassung durch einen Kamerasensor kann berührungslos anhand zeitlich aufgelöste Videodaten aus dem Erfassungsbereich erfolgen, wobei etwa durch eine angeschlossene Analyseeinheit die erfassten Nutzerbewegungen bestimmten Gesten zugeordnet werden können. Ferner kann eine berührungslose Erfassung mittels einer Infrarotleiste, einer Lichtschranke oder eines Ultraschallsensors nach an sich bekannter Weise erfolgen. Andere Formen sowie gemischte Detektionsweisen können ebenso verwendet werden.

Die Bedienhandlung des Nutzers kann insbesondere eine Geste umfassen. Durch die Erfassung von Bedienhandlungen mittels Gesten wird dem Nutzer eine besonders einfache und intuitive Eingabemöglichkeit für verschiedene Bedienhandlungen bereitgestellt. Unter einer "Geste" im Sinne der Erfindung wird eine bestimmte Stellung oder eine bestimmte Bewegung eines Betätigungsobjekts verstanden. Das Betätigungsobjekt kann insbesondere ein Körperteil des Nutzers sein kann, insbesondere ein Finger oder eine Hand. Alternativ oder zusätzlich kann ein anderes Betätigungsobjekt vorgesehen sein, beispielsweise ein geeigneter Stift, etwa mit einer besonderen technischen Ausbildung, welche die Erfassung einer Geste mittels des Betätigungsobjekts ermöglicht oder erleichtert. Die Gesten werden im Erfassungsbereich ausgeführt, das heißt bei einem zweidimensionalen Erfassungsbereich entlang einer Fläche in einem bestimmten Bereich und bei einem dreidimensionalen Erfassungsbereich in einem Raumbereich. Insbesondere werden Gesten berührungslos in einem Raum oder während einer fortdauernden Berührung der Erfassungseinheit, insbesondere ihrer Oberfläche, erfasst.

Bei einer Ausbildung des erfindungsgemäßen Verfahrens umfasst die erfasste Bedienhandlung eine Tippgeste, eine Wischgeste oder eine Zeigegeste. Die Gesten können dadurch vorteilhafterweise nach an sich bekannter Weise ausgestaltet sein.

Insbesondere werden Zeigegesten, Wischgesten und/oder vergleichbare Gesten verwendet, die Nutzern aus dem alltäglichen Gebrauch vertraut sind, ebenso wie beispielsweise Handdrehungen, Greifgesten sowie Kombinationen mehrerer, gegebenenfalls unmittelbar kurz nacheinander ausgeführter Gesten.

Der Annäherungsbereich kann als bestimmter Raum- oder Flächenbereich ausgebildet sein, beispielsweise als Bereich innerhalb eines bestimmten Abstandes von einem definierten Punkt oder Objekt. Insbesondere kann beim Eintreten des Betätigungsobjekts in den Annäherungsbereich ein Wechsel von einem Anzeige- zu einem Bedienmodus des Bediensystems vorgesehen sein. Der Annäherungsbereich ist so definiert, dass er einen Raum in einer Umgebung eines Bedienelements umfasst, das heißt, der Eintritt in den Annäherungsbereich wird in diesem Fall erfasst, bevor eine Bedienung des Bedienelements vorgenommen wird. Es kann dann der Bedienmodus aktiviert werden, in dem zum Beispiel eine Darstellung einer Bedienoberfläche so angepasst wird, dass eine besonders leichte Bedienung möglich ist.

Die Geste kann ferner eine mittels des Betätigungsobjekts, insbesondere von einer Hand des Nutzers, ausgeführte Bewegung umfassen. Der Geste kann dabei einer Richtung zugeordnet werden, die insbesondere mit einer Bewegungsrichtung oder einer Funktion in Verbindung steht, welche der Geste zugeordnet ist. Zum Beispiel kann die Geste als Verschiebung eines Bedienobjekts interpretiert werden.

Bei einer Ausbildung umfasst die Bedienhandlung zumindest einen Gestenabschnitt, der in einem dreidimensionalen Raum, das heißt insbesondere ohne Berührung einer Oberfläche, ausgeführt wird. Alternativ oder zusätzlich kann die Bedienhandlung zumindest einen Gestenabschnitt umfassen, der entlang einer Oberfläche ausgeführt wird. Die Bedienhandlung kann ferner vollständig in zwei oder drei Dimensionen ausgeführt werden oder es können verschiedene Gestenabschnitte eine Bedienhandlung im dreidimensionalen Raum und entlang einer zweidimensionalen Fläche ausgeführt werden.

Bei einer weiteren Ausbildung wird ferner durch eine Anzeigeeinheit eine Bedienoberfläche angezeigt und die Bedienhandlung wird in Bezug zu der angezeigten Bedienoberfläche erfasst. Dadurch kann das erfindungsgemäße Verfahren vorteilhafterweise für eine Bedienung einer grafischen Bedienoberfläche verwendet werden.

Die Erzeugung und Anzeige der Bedienoberfläche erfolgt auf an sich bekannte Weise, beispielsweise durch eine Anzeigefläche, insbesondere einen Touchscreen. Als "Bedienoberfläche" im Sinne der Erfindung wird eine Darstellung für eine Mensch-Maschine-Schnittstelle bezeichnet. Dabei sind technische Einrichtungen mittels Steuerelementen bedienbar, wozu etwa Schaltflächen oder Symbole der Darstellung der Bedienoberfläche verwendet werden können. Insbesondere kann die Bedienoberfläche Schalt- und Bedienelemente umfassen, welche die Bedienung einer Funktionalität für einen Menschen erfassbar darstellen. Beispielsweise kann der Betrag eines Parameters dargestellt werden und seine Einstellung durch ein Einstellelement visualisiert werden. Die Bedienoberfläche kann ferner Elemente zur Informationsanzeige umfassen und damit eine durch einen Menschen interpretierbare Ausgabe ermöglichen.

Unter einem Schaltelement wird im Sinne der Erfindung ein Steuerelement einer grafischen Benutzerschnittstelle verstanden. Ein Schaltelement unterscheidet sich von Elementen und Flächen zur reinen Informationsanzeige, sogenannten Anzeigeelementen, darin, dass sie markierbar und auswählbar sind. Bei einer Markierung eines Schaltelements kann dieses hervorgehoben dargestellt werden, etwa durch eine grafische Hervorhebung gegenüber nicht markierten Schaltelementen. Ferner kann ein markiertes Schaltelement mittels einer Bedienhandlung ausgewählt werden. Bei einer Auswahl eines Schaltelements wird eine ihm zugeordnete Funktion ausgeführt. Die Funktion kann nur zu einer Veränderung der Informationsanzeige führen. Ferner können über die Schaltelemente Einrichtungen gesteuert werden, deren Bedienung von der Informationsanzeige unterstützt wird. Die Schaltelemente können somit herkömmliche mechanische Schalter ersetzen.

Die Bedienhandlung kann mittels einer ortsaufgelösten Berührungserfassungseinrichtung erfasst werden, durch welche die Position einer Berührung des Benutzers mit einem Bedienelement auf der Anzeigefläche bestimmt wird und diese Position einem Schaltelement der grafischen Bedienoberfläche zugeordnet wird, wobei das Schaltelement markiert und/oder ausgewählt wird.

Bei einer zweidimensional erfassten Bedienhandlung kann beispielsweise an einer bestimmten Position einer berührungsempfindlichen Oberfläche ein Druck oder eine Berührung, etwa auf einen Touchscreen, erfasst werden. Bei einer Berührung wird dabei insbesondere ein direkter Kontakt zwischen dem Betätigungsobjekt und der berührungsempfindlichen Oberfläche hergestellt. Ferner kann allerdings vorgesehen sein, dass, etwa bei kapazitiven Sensoren, die Berührung nicht vollkommen ausgeführt werden muss, sondern eine Annäherung bis dicht an der Oberfläche bereits als Berührung bewertet wird. Beispielsweise kann eine Glasplatte zwischen dem Betätigungsobjekt und dem eigentlichen Sensor der Berührung angeordnet sein, sodass der Sensor nicht selbst berührt wird, sondern eine Berührung der Glasplatte ausreicht.

Dabei kann ferner die Dauer des ausgeübten Drucks oder der Berührung detektiert werden, etwa um zwischen einem einfachen Drücken (Press) und einer längeren Druckdauer oberhalb eines bestimmten Schwellenwerts (*Longpress*) zu unterscheiden. Zudem kann ein Schieberegler (*Slider*) als Bedienelement dargestellt werden, wobei eine Wischbewegung als Betätigung beziehungsweise Einstellung des Bedienelements vorgesehen sein kann. In ähnlicher Weise kann ein Bedienelement durch Ziehen und Ablegen (*Drag and Drop*) von einer Startposition zu einer Zielposition innerhalb der grafischen Bedienoberfläche bewegt werden. Ferner kann vorgesehen sein, dass anhand einer Wischgeste in einem Bereich der grafischen Bedienoberfläche eine Verschiebung der dargestellten Bedienoberfläche angezeigt wird, etwa um verschiedene Ausschnitte einer Bedienoberfläche anzuzeigen, deren Abmessungen größer sind als die anzeigbare Fläche. Dabei können ferner verschiedene Arten der Berührung der berührungsempfindlichen Oberfläche unterschieden werden, etwa eine Berührung mit einem, zwei oder drei Fingern. Zudem können Berührungen an mehreren Positionen ausgewertet werden, beispielsweise an zwei zueinander beabstandeten Positionen, um Operationen wie eine Drehung oder eine Skalierung eines Objekts oder einer Ansicht (Zoom, Strecken oder Stauchen) durchzuführen. Ferner können andere Gesten auf einer berührungsempfindlichen Oberfläche detektiert und ausgewertet werden.

Bei einer dreidimensional erfassten Bedienhandlung kann ein Bewegungspfad sowie eine zeitliche Veränderung einer Stellung oder Haltung eines Betätigungsobjekts, etwa der Hand des Nutzers, erfasst werden. Beispielsweise kann eine Wischgeste in eine bestimmte Richtung erfasst werden, die etwa eine Bewegung des Betätigungsobjekts von einer Seite zu einer anderen umfasst. Insbesondere kann eine Wischbewegung in horizontaler oder vertikaler Richtung erfasst werden. Dabei kann die Richtung einer Bewegung auf verschiedene Weise erfasst werden, insbesondere indem eine Bewegung durch verschiedene Raumbereiche erfasst wird, etwa einen linken und einen rechten Bereich. Dabei kann die Auflösung bei der Detektion unterschiedlich gebildet sein, beispielsweise mit zwei Raumbereichen, sodass ein Wechsel zwischen diesen beiden Bereichen als Bewegung in eine bestimmte Richtung interpretiert werden kann. Ferner können mehrere Raumbereiche vorgesehen sein, insbesondere in einer dreidimensionalen Anordnung, sodass Bewegungen in verschiedene Raumrichtungen und/oder mit höherer räumlicher Auflösung bestimmt werden können.

Es kann ferner eine Zeigegeste erfasst werden, wobei insbesondere anhand einer Stellung, einer Position und/oder eines Bewegungsablaufs des Betätigungsobjekts eine Richtung sowie eine Position der Bedienoberfläche bestimmt wird. Beispielsweise kann die Position als Schnittpunkt der Ebene der Anzeige der Bedienoberfläche mit der bestimmten Richtung bestimmt werden. Die Zeigegeste kann dabei beispielsweise zum Auswählen und/oder Markieren eines Bedienobjekts der Bedienoberfläche verwendet werden, etwa analog zu einer Tippgeste auf einer Oberfläche. Ferner können anhand weiterer Gesten Operationen analog zu den oben für zweidimensionale Listen beschriebenen Operationen durchgeführt werden, etwa eine Drehung oder eine Skalierung eines Objekts oder einer Ansicht.

Beim Erfassen einer Geste in einem dreidimensionalen Erfassungsbereich kann ferner die Haltung einer Hand berücksichtigt werden, etwa eine geöffnete oder geschlossene Haltung sowie die Krümmung einzelner Finger der Hand.

Erfindungsgemäß werden anhand der Bedienhandlung Rückmeldungsdaten erzeugt und auf an sich bekannte Weise an die Rückmeldungsvorrichtung übertragen. Hierzu besteht zumindest zeitweise eine datentechnische Verbindung zwischen der Erfassungseinheit und der Rückmeldungsvorrichtung. Insbesondere kann eine Verbindung mittels elektromagnetischer Wellen bestehen, etwa über Bluetooth, Infrarot oder WLAN.

Die datentechnische Verbindung kann ferner so gebildet sein, dass die Übertragung der Rückmeldungsdaten in Kombination mit einer Identifikation der Rückmeldungsvorrichtung durchgeführt wird, beispielsweise indem die Rückmeldungsdaten an eine spezifische Rückmeldungsvorrichtung übertragen werden oder die Übertragung lediglich zu einer Rückmeldungsvorrichtung eines bestimmten Nutzers vorgenommen wird. Auf diese Weise kann sichergestellt werden, dass die haptisch wahrnehmbare Rückmeldung lediglich für einen bestimmten Nutzer ausgegeben wird. Dies ermöglicht es zudem, Einstellungen anhand persönlicher Präferenzen vorzunehmen.

Bei einer Weiterbildung umfasst das haptisch wahrnehmbare Ausgabesignal eine Vibration mit einer Frequenz, einer Amplitude und einer Dauer. Dadurch kann vorteilhafterweise ein besonders leicht wahrnehmbares Ausgabesignal erzeugt werden, welches ferner eine dem Nutzer vertraute Rückmeldung für eine Bedienhandlung gibt.

Das Ausgabesignal kann ferner mehrere Vibrationen umfassen, beispielsweise mehrere Vibrationen einer bestimmten Dauer in einem bestimmten zeitlichen Abstand. Die Amplitude und die Frequenz können ferner zeitlich veränderlich gebildet werden, das heißt, sie können sich während der Dauer der ausgegebenen Vibration verändern, beispielsweise um eine anfangs weniger und dann zunehmend intensivere Vibrationen auszugeben.

Die Rückmeldungsvorrichtung ist auf an sich bekannte Weise gebildet. Sie umfasst insbesondere einen Aktuator, welcher in wirksamer Verbindung mit dem Übertragungsbereich steht. Dies kann beispielsweise ein Motor sein, durch den eine Bewegung erzeugbar ist, durch die ein Impuls auf eine bestimmte Fläche der Rückmeldungsvorrichtung übertragen werden kann.

Der Übertragungsbereich kann auf verschiedene Weise gebildet sein, beispielsweise durch eine Kontaktfläche, mittels welcher ein Kontakt, insbesondere eine kraftschlüssige Verbindung zwischen der Rückmeldungsvorrichtung und der Haut eines Nutzers gebildet wird. Der Kontakt braucht dabei nicht direkt zu bestehen, sondern kann beispielsweise durch Kleidung hindurch indirekt erfolgen. Je nach der Art der haptisch wahrnehmbaren Rückmeldung kann diese unterschiedlich durch die Art des Kontakts mit dem Nutzer beeinflusst werden, beispielsweise durch eine dämpfenden Wirkung von Kleidung bei der Übertragung von Impulsen.

Bei einer Ausbildung des Verfahrens ist die Rückmeldungsvorrichtung von der Erfassungseinheit beabstandet und am Körper des Nutzers angeordnet. Dadurch kann vorteilhafterweise eine haptisch wahrnehmbare Rückmeldung ausgegeben werden, obwohl eine räumliche Trennung zwischen der Erfassungseinheit und Rückmeldungsvorrichtung besteht.

Bei einer weiteren Ausbildung ist die Rückmeldungsvorrichtung an einem Arm, insbesondere im Bereich eines Handgelenks des Nutzers befestigt. Die Rückmeldungsvorrichtung bewegt sich somit zusammen mit einer Hand des Nutzers, welche zur Ausführung von Bedienhandlungen oder zum Führen eines Betätigungsobjekts genutzt werden kann. Dies erlaubt vorteilhafterweise eine besonders enge Kopplung des haptisch wahrnehmbare Rückmeldungssignals an den Nutzer. Die Ausgabe kann insbesondere auf besonders leicht und intuitiv erfassbare Weise erfolgen, etwa indem die Rückmeldung nahe der Hand ausgegeben wird, mittels welcher die Bedienhandlung durchgeführt wurde. Das heißt, es kann eine enge örtliche Beziehung zwischen dem Ort der Bedienhandlung und dem Ort des haptisch wahrnehmbaren Ausgabesignals hergestellt werden, wobei dennoch die beabstandete Anordnung des Übertragungsbereichs und des Erfassungsbereichs gewahrt bleibt.

Vorrichtungen zur Erzeugung einer Rückmeldung mittels Vibration sind an sich bekannt, beispielsweise aus dem Bereich der Mobiltelefone, Fitnessarmbänder, intelligenter Uhren (*smart watch*) oder vergleichbarer Einrichtungen. Selbstverständlich sind weitere Ausführungen der Rückmeldungsvorrichtung denkbar, beispielsweise als Armring, Fingerring, Halsband oder Kette, Brille, Ohranhänger oder anderes Schmuckstück, Implantat oder Handschuh. Ferner kann die Rückmeldungsvorrichtung auch einen Sicherheitsgurt, ein Lenkrad oder einen Sitz umfassen beziehungsweise in diese integriert sein.

Bei bekannten Systemen wird der Nutzer typischerweise auf eine Nachricht des Geräts, etwa einen eingehenden Anruf bei einem Mobiltelefon, aufmerksam gemacht. Dagegen wird die haptisch wahrnehmbare Rückmeldung, insbesondere eine Vibration, gemäß der Erfindung durch die Rückmeldungsvorrichtung als Rückmeldung über eine Eingabe anhand einer weiteren Einrichtung ausgegeben, wobei diese weitere Einrichtung eine von der Rückmeldungsvorrichtung getrennte, eigenständige Einheit darstellt. Beispielsweise wird eine Rückmeldung über eine Bedienung eines Touchscreens in einem Fahrzeug mittels einer intelligenten Uhr ausgegeben oder eine haptisch wahrnehmbare Rückmeldung wird anhand einer dreidimensionalen Geste erzeugt und ausgegeben.

Dies erweitert die Möglichkeiten zur Ausgabe haptisch wahrnehmbarer Rückmeldungen. Hierzu wird nämlich bei bekannten Systemen vorausgesetzt, dass ein Kontakt des Nutzers mit der bedienten Einrichtung, welche auch die haptisch wahrnehmbare Rückmeldung ausgibt, besteht. Beispielsweise kann eine Vibration eines bedienten Touchscreens ausgegeben werden, während der Nutzer dieses berührt. Die Erfindung ermöglicht es allerdings auch, die Rückmeldung haptisch wahrnehmbar auszugeben, obwohl in einer bestimmten Situation der direkte, insbesondere kraftschlüssige Kontakt des Nutzers mit der Einrichtung unterbrochen ist, beispielsweise beim Abheben des Fingers von dem Touchscreen.

Die Erfindung erlaubt es zudem, eine haptisch wahrnehmbare Rückmeldung auszugeben, obwohl die bediente Einrichtung, etwa der Touchscreen, hierfür nicht eingerichtet ist. Die physische Trennung der Erfassungseinheit von der Rückmeldungsvorrichtung erlaubt es zudem, die haptisch wahrnehmbare Rückmeldung nutzerspezifisch und/oder spezifisch für die jeweilige Rückmeldungsvorrichtung zu gestalten. Beispielsweise kann eine Konfigurierbarkeit des Bediensystems vorgesehen sein, wobei verschiedene Nutzer verschiedene Arten oder Ausgestaltungen der haptisch wahrnehmbare Rückmeldung einstellen können.

Erfindungsgemäß sind der Übertragungsbereich und der Erfassungsbereich voneinander beabstandet angeordnet. Dies bedeutet insbesondere, dass bei einer Erfassung der Bedienhandlung anhand einer berührungsempfindlichen Oberfläche der Übertragungsbereich beabstandet von der Oberfläche zur Erfassung der Bedienhandlung angeordnet ist. Beispielsweise wird die Bedienhandlung mittels eines Fingers auf einer Oberfläche eines Touchscreens vorgenommen, während der Übertragungsbereich eine Kontaktfläche zwischen einer intelligenten Uhr und einer Hautoberfläche des Nutzers ist.

Das heißt zum Beispiel bei einer Bedienhandlung ein einem zweidimensionalen Erfassungsbereich, dass die Kontaktfläche zwischen dem Finger des Nutzers und der berührungsempfindlichen Oberfläche verschieden ist von der Kontaktfläche zwischen der Rückmeldungsvorrichtung und dem Nutzer. Ferner ist bei der Erfassung einer dreidimensionalen Geste der Erfassungsbereich, in dem etwa eine Geste einer Hand erfasst wird, unterschiedlich von dem Übertragungsbereich, also etwa einem Kontaktbereich zwischen der Rückmeldungsvorrichtung und dem Nutzer.

Dabei ist zudem vorgesehen, dass der Übertragungsbereich und der Erfassungsbereich als voneinander beabstandet angesehen werden, wenn sie fundamental unterschiedlich geartet sind, insbesondere wenn der Erfassungsbereich dreidimensional und der Übertragungsbereich zweidimensional ausgebildet ist. Das heißt, ein zweidimensionaler Übertragungsbereich wird als "beabstandet" von einem dreidimensionalen Erfassungsbereich angesehen, selbst wenn sich der zweidimensionale Übertragungsbereich innerhalb des Erfassungsbereichs befindet.

Beispielsweise können bei dem erfindungsgemäßen Verfahren Gesten in einem dreidimensionalen Raum erfasst werden. Wird die haptisch wahrnehmbare Rückmeldung mittels einer intelligenten Uhr am Handgelenk des Nutzers ausgegeben, so kann sich dieses Handgelenk mit der Uhr zwar innerhalb des Erfassungsbereichs befinden, die Geste wird allerdings anhand der dreidimensionalen Bewegung der Hand erfasst und ausgewertet, während die Kontaktfläche zwischen der Uhr und dem Handgelenk für die Erfassung der Geste nicht relevant ist. Insbesondere ist der Übertragungsbereich in diesem Fall verdeckt und für die Erfassungseinheit, etwa eine Kamera, zur Erfassung einer dreidimensionalen Bedienhandlung nicht erfassbar.

Bei einer Weiterbildung umfassen die Rückmeldungsdaten einen ersten oder einen zweiten Rückmeldungstyp und das Ausgabesignal wird in Abhängigkeit von dem Rückmeldungstyp gebildet. Dadurch können vorteilhafterweise verschiedene Typen von Rückmeldungen ausgegeben werden.

Beispielsweise können verschiedene Klassen von Rückmeldungen unterschieden werden, beispielsweise positive und negative Rückmeldungen. Wird etwa eine Bedienhandlung durchgeführt, die eine Wischgeste umfasst, so kann anhand dieser Geste eine Verschiebung eines Bedienobjekts vorgenommen werden. Für diese Verschiebung kann danach unterschieden werden, ob sie gemäß der Bedienhandlung durchgeführt werden konnte oder ob die Verschiebung nicht erfolgreich war, beispielsweise weil eine Bewegung über eine bestimmte Verschiebungsgrenze (Anschlag) hinaus nicht vorgesehen ist. Das haptisch wahrnehmbare Ausgabesignal kann je nach der Klassifizierung der vorgenommenen Bedienhandlung unterschiedlich erzeugt werden.

In weiteren Beispielen können alternativ oder zusätzlich weitere unterschiedliche Klassifizierungen der Rückmeldungsdaten als verschiedene Rückmeldungstypen vorgesehen sein. Die Ausgabesignale, die in Abhängigkeit von den jeweiligen Rückmeldungstyp erzeugt werden, können sich auf verschiedene Weisen voneinander unterscheiden, beispielsweise durch eine Vibration mit unterschiedlicher Intensität, Dauer und/oder Frequenz oder durch eine spezifisch gebildete Abfolge mehrerer Vibrationen.

Bei einer weiteren Ausbildung werden die Rückmeldungsdaten über eine Vermittlungseinheit an die Rückmeldungsvorrichtung übertragen. Dadurch kann vorteilhafterweise die Einbindung verschiedener Rückmeldungsvorrichtung eines Bediensystem erleichtert werden.

Beispielsweise kann vorgesehen sein, dass die Rückmeldungsdaten über eine, gegebenenfalls lösbare, kabelgebundene datentechnische Verbindung an die Vermittlungseinheit übertragen werden. Ferner kann vorgesehen sein, dass die Rückmeldungsdaten über eine weitere, insbesondere drahtlose datentechnische Verbindung an die Rückmeldungsvorrichtung übertragen werden. Dabei kann ferner eine Verarbeitung der Rückmeldungsdaten durch die Vermittlungseinheit vorgenommen werden, beispielsweise um die Ausgabe des Ausgabesignals durch die Rückmeldungsvorrichtung zu ermöglichen. Dabei kann beispielsweise eine Konfiguration der haptisch wahrnehmbaren Rückmeldung mittels der Vermittlungseinheit erfolgen, welche anhand der Rückmeldungsdaten das Ausgabesignal definiert und durch die Übertragung verarbeiteter Daten an die Rückmeldungsvorrichtung ein entsprechend gebildetes Ausgabesignal bewirkt.

Beispielsweise kann die Erfassungseinheit für die Bedienhandlung Teil eines Fahrzeugs sein, mit dem ferner ein Mobiltelefon trennbar datentechnisch verbunden ist. Zudem kann eine datentechnische Verbindung von dem Mobiltelefon zu einer intelligenten Uhr bestehen, beispielsweise mittels einer Funkverbindung. Rückmeldungsdaten können nunmehr zunächst an das Mobiltelefon übertragen werden, welches die Rückmeldungsdaten anschließend an die intelligente Uhr überträgt. Dabei kann eine Weiterverarbeitung der Rückmeldungsdaten durch das Mobiltelefon vorgenommen werden, bevor die verarbeiteten Daten an die intelligente Uhr übertragen werden, um dort das Ausgabesignal zu erzeugen. Die Weiterverarbeitung kann dabei beispielsweise anhand einer Konfiguration erfolgen, bei welcher ein Nutzer eine bestimmte Intensität des Ausgabesignals einstellen kann.

Bei einer Ausgestaltung der Erfindung wird ferner ein optisch und/oder akustisch wahrnehmbares weiteres Ausgabesignal erzeugt und ausgegeben. Dadurch kann vorteilhafterweise die Wirkung der Rückmeldung verstärkt werden. Die Ausgabe des weiteren Ausgangssignals erfolgt in diesem Fall zusätzlich zu dem haptisch wahrnehmbaren Ausgabesignal. Zur Ausgabe kann beispielsweise die Rückmeldungsvorrichtung, eine Anzeigeeinheit oder eine weitere Ausgabeeinrichtung verwendet werden.

Das erfindungsgemäße Bediensystem umfasst eine Erfassungseinheit, die einen Erfassungsbereich aufweist, in welchem eine Bedienhandlung eines Nutzers erfassbar ist. Es umfasst ferner eine Steuereinheit, durch die anhand der erfassten Bedienhandlung Rückmeldungsdaten erzeugbar sind, sowie eine Rückmeldungsvorrichtung, an welche die Rückmeldungsdaten übertragbar sind. Dabei weist die Rückmeldungsvorrichtung einen Übertragungsbereich auf, in dem anhand der Rückmeldungsdaten ein haptisch wahrnehmbares Ausgabesignal ausgebbar ist. Dabei sind der Übertragungsbereich und der Erfassungsbereich voneinander beabstandet angeordnet.

Das erfindungsgemäße Bediensystem ist insbesondere ausgebildet, das vorstehend beschriebene erfindungsgemäße Verfahren zu implementieren. Das Bediensystem weist somit dieselben Vorteile auf wie das erfindungsgemäße Verfahren.

Bei einer Ausbildung des erfindungsgemäßen Bediensystems umfasst die Erfassungseinheit eine berührungsempfindliche Oberfläche oder eine Einrichtung zur Detektion elektromagnetischer Wellen. Dadurch können vorteilhafterweise Bedienhandlungen anhand einer Berührung einer Fläche oder anhand einer Geste in einem dreidimensionalen Raum erfasst werden.

Das erfindungsgemäße Fahrzeug umfasst ein Bediensystem gemäß der obigen Beschreibung.

Bei einer Ausbildung ist die Erfassungseinheit von dem Fahrzeug umfasst und die Rückmeldungsvorrichtung ist von einem mobilen Nutzergerät umfasst. Dadurch wird vorteilhafterweise das haptisch wahrnehmbare Ausgabesignal durch eine Einrichtung ausgegeben, die von einer fahrzeuginternen Erfassungseinheit getrennt ausgebildet ist.

Insbesondere ist vorgesehen, dass die Erfassungseinheit eine fahrzeuginterne Einrichtung ist, während die Rückmeldungsvorrichtung eine fahrzeugexterne Einheit ist, welches jedoch innerhalb des Fahrzeugs angeordnet ist. Die Rückmeldungsvorrichtung kann dabei am Körper des Nutzers befestigt sein, wobei das haptisch wahrnehmbare Ausgabesignal mittels eines Übertragungsbereichs an den Nutzer übertragen wird, beispielsweise mittels einer Fläche in direktem oder indirektem Kontakt mit der Hautoberfläche des Nutzers. Beispielsweise ist die Erfassungseinheit von einem Infotainmentsystem des Fahrzeugs umfasst, beispielsweise ausgebildet als Touchscreen des Fahrzeugs, und die Rückmeldungsvorrichtung ist eine intelligente Uhr des Nutzers.

Die Erfindung wird nun anhand von Ausführungsbeispielen mit Bezug zu den Zeichnungen erläutert.

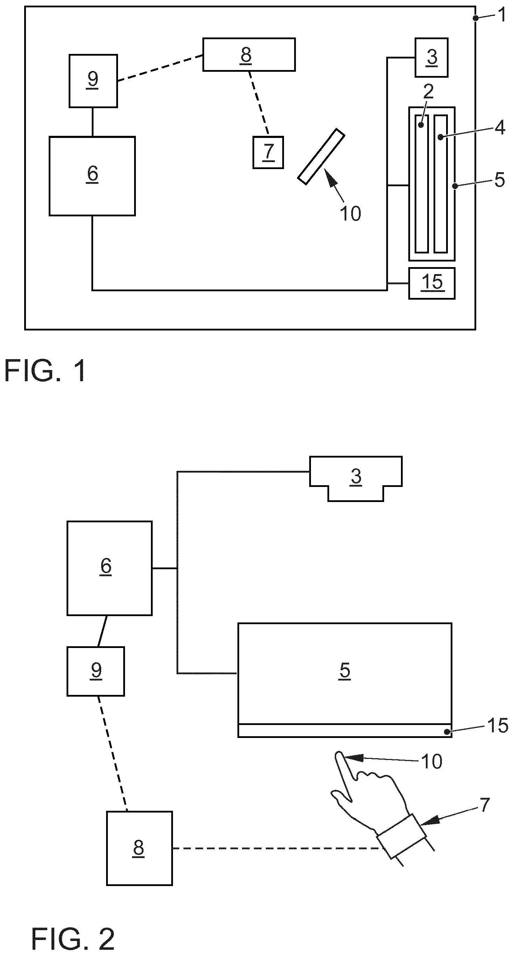

Figuren 1 und 2 zeigen ein Ausführungsbeispiel des erfindungsgemäßen Bediensystems in einem Fahrzeug.

Mit Bezug zu den Figuren 1 und 2 wird ein Ausführungsbeispiel des erfindungsgemäßen Bediensystems erläutert.

Ein Fahrzeug 1 umfasst eine Steuereinheit 6, mit der ein Touchscreen 5 und eine Erfassungseinheit 3, im dargestellten Beispiel eine Kamera 3, gekoppelt sind. Ferner ist eine Kommunikationseinheit 9 mit der Steuereinheit 6 gekoppelt. Der Touchscreen 5 umfasst eine weitere Erfassungseinheit 2, die bei dem Ausführungsbeispiel als berührungsempfindliche Oberfläche 2 ausgebildet ist, und eine Anzeigeeinheit 4. Bei dem Ausführungsbeispiel ist ferner am unteren Rand des Touchscreens 5 eine Annäherungserfassungseinheit 15 angeordnet, die ebenfalls mit der Steuereinheit 6 gekoppelt ist. Die Koppelung zwischen den verschiedenen Komponenten des Fahrzeugs 1 kann dabei beispielsweise durch einen CAN-Bus des Fahrzeugs 1 erfolgen.

In dem Fahrzeug 1 sind ferner eine Vermittlungseinheit 8, im dargestellten Fall ein Mobiltelefon 8, eine Rückmeldungsvorrichtung 7, im dargestellten Fall eine intelligente Uhr (*Smart Watch*) 7, sowie ein Betätigungsobjekt 10 angeordnet. Das Betätigungsobjekt 10 ist bei dem Ausführungsbeispiel ein Finger 10 eines Nutzers. In weiteren Ausführungsbeispielen ist das Betätigungsobjekt eine Hand oder ein anderes Körperteil des Nutzers, ein Stift oder ein anderer geeigneter Gegenstand und/oder eine Vorrichtung.

Der Touchscreen 5 ist auf an sich bekannte Weise ausgebildet. Die berührungsempfindliche Oberfläche 4 ist auf einer Anzeigefläche der Anzeigeeinheit 4 angeordnet, das heißt zwischen der Anzeigeeinheit 4 und einem Betrachter. Beispielsweise kann eine Folie über der Anzeigeeinheit 4 angeordnet sein, mit welcher die Position einer Berührung eines Betätigungsobjekts 10 detektiert werden kann. Bei dem Betätigungsobjekt 10 handelt es sich insbesondere um die Spitze eines Fingers 10 eines Nutzers. Die Folie kann zum Beispiel als resistive Touchfolie, kapazitive Touchfolie oder piezoelektrische Folie ausgebildet sein. Ferner kann die Folie so ausgebildet sein, dass ein Wärmestrom, der zum Beispiel von der Spitze des Fingers 10 ausgeht, gemessen wird.

Aus der zeitlichen Entwicklung der Berührung der Folie lassen sich verschiedene Eingaben gewinnen. Beispielsweise kann im einfachsten Fall das Berühren der Folie bei einer bestimmten Position erfasst und einem auf der Anzeigefläche 2 angezeigten grafischen Objekt zugeordnet werden. Des Weiteren kann die Dauer der Berührung bei einer bestimmten Position oder innerhalb eines bestimmten Bereichs erfasst werden. Es können ferner Gesten erfasst werden, wobei insbesondere eine zeitliche Veränderung der Position der Berührung der berührungsempfindlichen Oberfläche 2 detektiert und ausgewertet wird, wobei einem Bewegungspfad eine Geste zugeordnet wird.

Durch einen Kamerasensor der Kamera 3 sind auf an sich bekannte Weise zeitlich und räumlich aufgelöst Bilddaten erfassbar. Die Kamera 3 weist dabei einen Erfassungsbereich auf, der insbesondere durch die Gestaltung des Kamerasensors sowie einer Optik der Kamera 3 definiert wird. Innerhalb des Erfassungsbereichs sind die Bilddaten so erfassbar, dass sie zur Auswertung und Erkennung von Gesten geeignet sind. Der Erfassungsbereich der Kamera 3 ist beispielsweise so ausgebildet, dass in einem bestimmten Raumbereich im Innenraum des Fahrzeugs 1 Bewegungen, Stellungen und Positionen eines Betätigungsobjekts 10, etwa einer Hand, erfassbar sind. Der Erfassungsbereich der Kamera 3 kann ferner die Anzeigefläche des Touchscreens 5 umfassen, sodass anhand der erfassten Bilddaten etwa eine Position einer Fingerspitze relativ zu dem Touchscreen 5 bestimmbar ist.

Die Annäherungserfassungseinheit 15 ist in dem Ausführungsbeispiel so gebildet, dass eine Annäherung des Betätigungsobjekts 10 an den Touchscreen 5 erfassbar ist. Die Annäherungserfassungseinheit 15 weist dabei einen Erfassungsbereich auf, der sich über einen Raumbereich zwischen dem Touchscreen 5 und einer typischen Betrachterposition erstreckt. Insbesondere ist der Erfassungsbereich der Annäherungserfassungseinheit 15 nahe an dem Touchscreen 5 angeordnet. Die Annäherung wird dabei dadurch erfasst, dass das Betätigungsobjekt 10 in den Erfassungsbereich eintritt.

Die Annäherungserfassungseinheit 15 kann als Sensorleiste ausgebildet sein und beispielsweise eine Reflektionslichtschranke umfassen, die mindestens ein Leuchtmittel zum Emittieren von elektromagnetischer Detektionsstrahlung in den Erfassungsbereich und ein Empfangselement zum Detektieren eines an dem Betätigungsobjekt 10 gestreuten und/oder reflektierten Anteils der Detektionsstrahlung umfassen. Sie kann insbesondere so ausgebildet sein, das Betätigungsobjekt 10 in dem Erfassungsbereich anhand der Intensität der empfangenen Detektionsstrahlung erkannt werden kann.

Der Erfassungsbereich kann ferner mehrere Detektionszonen aufweisen, beispielsweise zwei Detektionszonen rechts und links, oben und unten oder in einer anderen Anordnung. Die Annäherungserfassungseinheit kann ferner verschiedene Leuchtmittel für die einzelnen Detektionszonen umfassen, die jeweils elektromagnetische Detektionsstrahlung in die jeweilige Detektionszone emittieren.

Des Weiteren kann eine Modulationsvorrichtung zum Modulieren der emittierten Detektionsstrahlung vorgesehen sein, sodass sich die Detektionsstrahlung, die in die einzelnen Detektionszonen emittiert wird, jeweils hinsichtlich ihrer Modulation unterscheidet. In diesem Fall kann die Annäherungserfassungseinheit auch eine Analyseeinheit umfassen, die so ausgebildet ist, dass die empfangene reflektierte und/oder gestreute Detektionsstrahlung hinsichtlich ihrer Modulation analysiert werden kann, um zu ermitteln, in welcher Detektionszone die Detektionsstrahlung an einem Betätigungsobjekt gestreut oder reflektiert wurde.

Bei dem Ausführungsbeispiel ist vorgesehen, dass durch die Anzeigeeinheit 4 des Touchscreens 5 eine grafische Bedienoberfläche angezeigt wird, die mittels der berührungsempfindlichen Oberfläche 2 bedient werden kann. Dabei wird zwischen einem Anzeige- und einem Bedienmodus der grafischen Bedienoberfläche unterschieden, wobei der Bedienmodus aktiviert wird, wenn durch die Annäherungserfassungseinheit 15 eine Annäherung des Betätigungsobjekts 10 an den Touchscreen 5 erfasst wird, während der Anzeigemodus aktiviert wird, wenn keine solche Annäherung detektiert wird. In dem Anzeigemodus wird die Anzeige so gebildet, dass Informationen besonders übersichtlich und leicht erfassbar dargestellt werden. In dem Bedienmodus wird die Anzeige dagegen so gebildet, dass Bedienelemente besonders hervorgehoben werden, etwa durch eine größere Darstellung, um Eingaben durch einen Nutzer zu erleichtern.

Die intelligente Uhr 7 ist an dem Handgelenk der Hand des Fingers 10 so angeordnet, dass ein direkter Kontakt zwischen der Haut des Nutzers und einer Fläche der intelligenten Uhr 7 hergestellt wird. In weiteren Ausführungsbeispielen ist die Rückmeldungsvorrichtung 7 in anderer Weise ausgebildet, beispielsweise als Armring, Fingerring, Halsband oder Kette, Brille, Ohranhänger oder anderes Schmuckstück, Implantat oder Handschuh. Ferner kann die Rückmeldungsvorrichtung auch einen Sicherheitsgurt, ein Lenkrad oder einen Sitz umfassen beziehungsweise in diese integriert sein. In jedem Fall ist die Rückmeldungsvorrichtung 7 geeignet, ein haptisch wahrnehmbares Ausgabesignal zu erzeugen und an den Körper des Nutzers zu übertragen. Dabei kann in einem Übertragungsbereich ein direkter Kontakt zwischen der Rückmeldungsvorrichtung 7 und dem Körper bestehen, der Kontakt kann ferner indirekt hergestellt werden, beispielsweise durch Kleidung hindurch.

Das haptisch wahrnehmbare Ausgabesignal wird auf an sich bekannte Weise ausgegeben, beispielsweise mittels eines Motors mit einer Unwucht, wobei durch eine Bewegung des Motors eine Vibration der trägen Masse der Rückmeldungsvorrichtung 7, insbesondere über eine Fläche in dem Übertragungsbereich, ausgelöst wird. Alternativ oder zusätzlich kann die Ausgabe des haptisch wahrnehmbaren Ausgabesignals auf andere Weise erfolgen.

Bei dem Ausführungsbeispiel sind die Kommunikationseinheit 9, das Mobiltelefon 8 sowie die intelligente Uhr 7 durch drahtlose datentechnische Verbindungen miteinander gekoppelt. Die datentechnische Verbindung erfolgt jeweils auf an sich bekannte Weise, beispielsweise durch ein lokales Netzwerk oder ein größeres Netzwerk, etwa ein lokales Netzwerk in dem Fahrzeug 1. Die Verbindung kann beispielsweise mittels WLAN oder Bluetooth hergestellt werden.

In weiteren Ausführungsbeispielen kann etwa die Datenverbindung des Mobiltelefons 8 mit der Kombinationseinheit 9 durch den Anschluss eines Datenkabels hergestellt werden. In weiteren Ausführungsbeispielen besteht eine direkte datentechnische Verbindung zwischen der Rückmeldungsvorrichtung 7 und der Kommunikationseinheit 9.

Mit Bezug zu den Figuren 1 und 2 wird ein Ausführungsbeispiel des erfindungsgemäßen Verfahrens erläutert. Dabei wird von dem oben erläuterten Ausführungsbeispiel des erfindungsgemäßen Bediensystems ausgegangen.

In einem ersten Schritt wird eine Bedienhandlung des Nutzers erfasst. Diese wird mittels des Betätigungsobjekts 10 ausgeführt und kann bei dem Ausführungsbeispiel durch verschiedene Einrichtungen des Fahrzeugs 1 erfasst werden, die jeweils einenm bestimmten Erfassungsbereich aufweisen. Durch die berührungsempfindliche Oberfläche 2 des Touchscreens 5 können Bedienhandlungen erfasst werden, die durch den Finger 10 im Kontakt mit der berührungsempfindlichen Oberfläche 2 durchgeführt werden. Der Touchscreen 5 ist ferner dazu ausgebildet, das Betätigungsobjekt 10 an einer bestimmten Position in geringem Abstand zur berührungsempfindlichen Oberfläche 2 zu detektieren, beispielsweise einem Abstand von bis zu 3 cm zu einer Position auf der berührungsempfindlichen Oberfläche 2. Auf diese Weise kann ein Schweben (*Hovering*) des Betätigungsobjekts 10 über der berührungsempfindlichen Oberfläche 2 detektiert werden. Ferner wird durch die Annäherungserfassungseinheit 15 detektiert, ob sich der Finger 10 in einem Erfassungsbereich nahe bei dem Touchscreen 5 befindet. Zudem werden durch die Kamera 3 in ihrem Erfassungsbereich Bilddaten erfasst und analysiert, wobei die zeitlich veränderliche Position, Haltung und Stellung der Hand des Nutzers mit dem Finger 10 erfasst und ausgewertet wird und gegebenenfalls eine Geste erkannt wird.

In weiteren Ausführungsbeispielen kann die Bedienhandlung auf andere Weise oder anhand lediglich einer der beschriebenen Möglichkeiten erfasst werden.

Anhand der erfassten Bedienhandlung werden durch die Steuereinheit 6 Rückmeldungsdaten erzeugt und mittels der Kommunikationseinheit 9 über eine datentechnische Verbindung an die Vermittlungseinheit 8, in dem Ausführungsbeispiel das Mobiltelefon 8, übertragen. Durch die datentechnische Verbindung des Mobiltelefons 8 zu der Rückmeldungsvorrichtung 7, in dem Ausführungsbeispiel der intelligenten Uhr 7, werden die Rückmeldungsdaten dorthin weiter übertragen. Durch die intelligente Uhr 7 wird anhand der Rückmeldungsdaten ein haptisch wahrnehmbares Ausgabesignal ausgegeben, bei dem Ausführungsbeispiel eine Vibration einer bestimmten Intensität, Frequenz und Dauer. Ferner können mehrere aufeinanderfolgende Vibrationssignale ausgegeben werden.

Die Eigenschaften des Ausgabesignals können anhand der Rückmeldungsdaten unterschiedlich gebildet werden, beispielsweise indem zwischen einer positiven und einer negativen Rückmeldung unterschieden wird. In diesem Fall können beispielsweise zwei verschiedene haptisch wahrnehmbare Ausgabesignale erzeugt und ausgegeben werden, etwa mit verschiedener Intensität, Frequenz und Dauer. Ferner können verschiedene Abfolgen von Vibrationssignalen ausgegeben werden.

In weiteren Ausführungsbeispielen kann vorgesehen sein, dass durch das Mobiltelefon 8 eine Vorverarbeitung der Rückmeldungsdaten vorgenommen wird, wobei beispielsweise unterschiedliche Typen von Rückmeldungen für verschiedene Bedienhandlungen und/oder Typen von Rückmeldungsdaten bestimmt werden.

Bei dem Ausführungsbeispiel ist vorgesehen, dass eine haptische Rückmeldung ausgegeben wird, wenn eine Annäherung des Betätigungsobjekts 10 an den Touchscreen 5 detektiert wird. Die Detektion erfolgt anhand der Annäherungserfassungseinheit 15, die ein Detektionssignal erzeugt, wenn der Finger 10 des Nutzers in dem Erfassungsbereich vor dem Touchscreen 5 detektiert wird. Eine Vibration definierter Intensität, Frequenz und Dauer wird ausgegeben, wenn der Eintritt des Fingers 10 in den Erfassungsbereich detektiert wird sowie wenn ein Verlassen des Fingers 10 detektiert wird. Das Ausgabesignal kann sich unterscheiden, je nachdem, ob ein Eintreten oder Austreten detektiert wird.

Ferner können Wischgesten erkannt werden, die durch den Finger 10, die Hand des Nutzers oder ein weiteres Betätigungsobjekts 10 im Erfassungsbereich der Annäherungserfassungseinheit 15 ausgeführt werden. Bei dem Ausführungsbeispiel weist die Annäherungserfassungseinheit 15 einen zweigeteilten Erfassungsbereich auf, wobei separat voneinander Annäherungen im linken oder rechten Bereich vor dem Touchscreen 5 detektierbar sind. In weiteren Ausführungsbeispielen können die Bereiche auf andere Weise angeordnet sein, zum Beispiel vertikal übereinander, oder es können mehr als zwei Bereiche vorgesehen sein.

Eine im dreidimensionalen Raum ausgeführte Wischgeste wird erkannt, wenn das Betätigungsobjekt 10 zunächst in dem einen und anschließend in dem anderen Bereich detektiert wird, das heißt, wenn das Betätigungsobjekt 10 eine Bewegung zwischen den Bereichen des Erfassungsbereichs vollzieht. Beispielsweise wird das Betätigungsobjekt 10 zunächst rechts und anschließend links im Erfassungsbereich detektiert und es wird eine Wischgeste nach links erkannt. Anhand dieser Wischgeste wird Steuerungseinheit 6 ein Steuersignal erzeugt, etwa zum entsprechenden Verschieben eines durch die Anzeigeeinheit 4 angezeigte Ausschnitt einer Bedienoberfläche. Ferner werden Rückmeldungsdaten erzeugt und über das Mobiltelefon 8 an die intelligente Uhr 7 übertragen. Durch die intelligente Uhr 7 wird ein Ausgabesignal haptisch wahrnehmbar erzeugt, im Falle des Ausführungsbeispiels eine Vibration bestimmter Intensität, Frequenz und Dauer.

Bei dem Ausführungsbeispiel ist ferner vorgesehen, dass durch die intelligente Uhr 7 haptisch wahrnehmbare Ausgabesignale ausgegeben werden, wenn eine Bedienhandlung auf der berührungsempfindlichen Oberfläche 2 des Touchscreens 5 erfasst wird. Die Ausgabesignale können während der Berührung zwischen dem Finger 10 und der berührungsempfindlichen Oberfläche 2 ausgegeben werden sowie im Anschluss an die Berührung, das heißt nach dem Lösen des Kontakts zwischen den Finger 10 und der berührungsempfindlichen Oberfläche 2. Alternativ oder zusätzlich kann eine haptisch wahrnehmbare Ausgabe bei einer Annäherung an die berührungsempfindliche Oberfläche 2 oder an eine bestimmte Position in der Umgebung der berührungsempfindlichen Oberfläche 2 erzeugt werden.

Bei dem Beispiel werden mehrere verschiedene Bedienhandlungen durch die berührungsempfindliche Oberfläche 2 erfasst. Dabei kann vorgesehen sein, dass für unterschiedliche Bedienhandlungen verschiedene Arten haptisch wahrnehmbarer Ausgabesignale erzeugt werden, beispielsweise Vibrationen mit unterschiedlicher Intensität, Frequenz und Dauer sowie unterschiedlich gebildete Abfolgen von Vibrationspulsen.

Es kann ein Druck an einer Position des Touchscreens 5 erfasst werden, wobei ferner die Intensität des ausgeübten Drucks berücksichtigt werden kann. Ferner kann die Dauer des Drucks berücksichtigt werden und ein lange andauernder Druck (*Longpress*) kann erkannt werden, wenn die Dauer einen bestimmten Schwellenwert überschreitet, und der Druck kann je nach der Dauer unterschiedlich interpretiert werden. Ferner kann eine Wischgeste auf der berührungsempfindlichen Oberfläche 2 detektiert werden, wobei sich die Position der Berührung des Fingers 10 auf der berührungsempfindlichen Oberfläche 2 zeitlich abhängig verändert und insbesondere einen Anfangs- und einen Endpunkt aufweist. In Abhängigkeit von einer solchen Wischgeste kann eine Einstellung eines verschiebbaren Regelelements (*Slider*) oder eine anders gebildete Verschiebung eines Elements vorgenommen werden. Ferner können Elemente einer auf dem Touchscreen 5 ausgegebenen grafischen Bedienoberfläche verschoben werden, beispielsweise bedienbare grafische Elemente oder ein dargestellter Ausschnitt einer Bedienoberfläche, deren Abmessungen die Größe der Anzeigeeinheit 4 überschreitet. Ferner kann unterschieden werden, ob eine Berührung mittels eines Fingers 10 oder mehrerer Finger detektiert wird. In weiteren Ausführungsbeispielen können alternativ oder zusätzlich weitere Bedienhandlungen durch die berührungsempfindliche Oberfläche 2 des Touchscreens 5 erfasst und interpretiert werden. Dabei können unterschiedliche haptisch wahrnehmbare Ausgabesignale verschiedene Bedienhandlungen vorgesehen sein.

Bei einem weiteren Ausführungsbeispiel ist ferner vorgesehen, dass analog zur Bestimmung einer Berührung der berührungsempfindlichen Oberfläche 2 durch den Finger 10 eine Position auf dem Touchscreen 5 bestimmt wird, wenn sich der Finger 10 in einer nahen Umgebung des Touchscreens 5 befindet, ohne dabei jedoch eine Berührung auszuführen. Insbesondere schwebt der Finger 10 dabei über einer Position des Touchscreens 5 (*Hovering*). Die Erfassung dieses Schwebens kann auf verschiedene Weise erfolgen, insbesondere durch eine kapazitive Sensorik des Touchscreens 5. Bei einem Ausführungsbeispiel wird, wenn der Finger 10 länger als einen bestimmten Schwellenwert über einer bestimmten Position schwebt, an dieser Position innerhalb der Anzeige ein Fenster mit Hilfsinformationen geöffnet, etwa zu einem an diese Position dargestellten Schaltelement. Ferner ist in diesem Fall vorgesehen, dass eine haptisch wahrnehmbare Rückmeldung ausgegeben wird, um den Nutzer über das Öffnen des Fensters zu informieren.

Bei dem Ausführungsbeispiel werden ferner verschiedene Gesten unterschieden, die durch die Kamera 3 erfasst werden können. Insbesondere wird dabei eine Position, Haltung und Stellung des Betätigungsobjekts 10, etwa einer Hand des Nutzers, ausgewertet. Ferner wird eine Bewegung berücksichtigt, insbesondere eine Bewegungsrichtung. Nach an sich bekannter Weise werden dabei verschiedene im dreidimensionalen Raum ausgeführte Gesten unterschieden, beispielsweise eine Wischgeste nach rechts oder links beziehungsweise nach oben oder unten. Ferner kann eine Zeigegeste erfasst werden, anhand derer insbesondere eine Position auf der Anzeigeeinheit 4 des Touchscreens 5 bestimmt wird. Ferner kann eine Geste zum Skalieren eines Objekts, welches durch die Anzeigeeinheit 4 ausgegeben wird, erkannt werden, insbesondere in einer Raumrichtung (*Stretch*) oder gleichmäßig in zwei Richtungen (Vergrößern, Verkleinern). In weiteren Ausführungsbeispielen können alternativ oder zusätzlich weitere Gesten durch die Kamera 3 erfasst und als Bedienhandlungen interpretiert werden.

Bei dem Ausführungsbeispiel wird ferner unterschieden, ob eine positive oder negative Rückmeldung erzeugt wird. Beispielsweise kann eine Bedienhandlung so ausgewertet werden, dass eine erfolgreiche oder eine nicht erfolgreiche Anweisung gegeben wird. So kann etwa eine Bedienhandlung eine Anweisung zu einer Verschiebung umfassen und für die Verschiebung kann ein "Anschlag" vorgesehen sein, das heißt eine räumliche Grenze, über die hinaus keine weitere Verschiebung möglich ist. Das Erreichen des Anschlags kann mittels eines negativen Ausgabesignals ausgegeben werden, während bei einer Verschiebung innerhalb der vorgegebenen Grenzen ein positives Ausgabesignal ausgegeben werden kann.

Ferner ist bei dem Ausführungsbeispiel vorgesehen, dass die haptisch wahrnehmbaren Ausgabesignale konfigurierbar sind. Dies erfolgt auf an sich bekannte Weise, etwa mittels einer Nutzereingabe.

Ferner kann das Betätigungsobjekt 10, die Hand oder der Finger 10 beziehungsweise der Nutzer und/oder die Rückmeldungsvorrichtung 7 identifiziert werden und das haptisch wahrnehmbare Ausgabesignal kann in Abhängigkeit von der Identität gebildet werden. Beispielsweise können verschiedene Konfigurationen der haptischen Rückmeldung für verschiedene Nutzer, Betätigungsobjekte 10 und/oder Rückmeldungsvorrichtungen 7 vorgesehen sein, etwa um das haptisch wahrnehmbare Ausgabesignal den Ausgabemöglichkeiten der jeweiligen Rückmeldungsvorrichtung 7 oder den Präferenzen des Nutzers anzupassen.

### Bezugszeichenliste

- 1: Fahrzeug
- 2: berührungsempfindliche Oberfläche
- 3: Kamera
- 4: Anzeigeeinheit
- 5: Touchscreen
- 6: Steuereinheit
- 7: Rückmeldungsvorrichtung; intelligente Uhr (*Smart Watch*)
- 8: Vermittlungseinheit; Mobiltelefon
- 9: Kommunikationseinheit
- 10: Betätigungsobjekt; Finger
- 15: Annäherungssensor

## Patentansprüche

1. Verfahren zum Betreiben eines Bediensystems, bei dem
in einem Erfassungsbereich einer Erfassungseinheit (2, 3, 15) eine Bedienhandlung eines Nutzers erfasst wird;
anhand der erfassten Bedienhandlung Rückmeldungsdaten erzeugt und an eine Rückmeldungsvorrichtung (7) übertragen werden; und
durch die Rückmeldungsvorrichtung (7) anhand der Rückmeldungsdaten in einem Übertragungsbereich ein haptisch wahrnehmbares Ausgabesignal ausgegeben wird; wobei
der Übertragungsbereich und der Erfassungsbereich voneinander beabstandet angeordnet sind,
**dadurch gekennzeichnet, dass**
die erfasste Bedienhandlung ein Eintreten eines Betätigungsobjekts in einen Annäherungsbereich umfasst, wobei der Annäherungsbereich einen Raum in einer Umgebung eines Bedienelements umfasst.

2. Verfahren gemäß Anspruch 1,
**dadurch gekennzeichnet, dass**
die Bedienhandlung mittels einer berührungsempfindlichen Oberfläche (2) und/oder einer Kamera (3) erfasst wird.

3. Verfahren gemäß einem der vorhergehenden Ansprüche,
**dadurch gekennzeichnet, dass**
die erfasste Bedienhandlung eine Tippgeste, eine Wischgeste oder eine Zeigegeste umfasst.

4. Verfahren gemäß einem der vorhergehenden Ansprüche,
**dadurch gekennzeichnet, dass**
die Bedienhandlung zumindest einen Gestenabschnitt umfasst, der in einem dreidimensionalen Raum ausgeführt wird.

5. Verfahren gemäß einem der vorhergehenden Ansprüche,
**dadurch gekennzeichnet, dass**
ferner durch eine Anzeigeeinheit (4) eine Bedienoberfläche angezeigt wird und die Bedienhandlung in Bezug zu der angezeigten Bedienoberfläche erfasst wird.

6. Verfahren gemäß einem der vorhergehenden Ansprüche,
**dadurch gekennzeichnet, dass**
das haptisch wahrnehmbare Ausgabesignal eine Vibration mit einer Frequenz, einer Amplitude und einer Dauer umfasst.

7. Verfahren gemäß einem der vorhergehenden Ansprüche,
**dadurch gekennzeichnet, dass**
die Rückmeldungsvorrichtung (7) von der Erfassungseinheit (2, 3, 15) beabstandet und am Körper des Nutzer angeordnet ist.

8. Verfahren gemäß Anspruch 7,
**dadurch gekennzeichnet, dass**
die Rückmeldungsvorrichtung (7) an einem Arm, insbesondere im Bereich eines Handgelenks, des Nutzers befestigt ist.

9. Verfahren gemäß einem der vorhergehenden Ansprüche,
**dadurch gekennzeichnet, dass**
die Rückmeldungsdaten einen ersten oder einen zweiten Rückmeldungstyp umfassen; und
das Ausgabesignal in Abhängigkeit von dem Rückmeldungstyp gebildet wird.

10. Verfahren gemäß einem der vorhergehenden Ansprüche,
**dadurch gekennzeichnet, dass**
die Rückmeldungsdaten über eine Vermittlungseinheit (8) an die Rückmeldungsvorrichtung (7) übertragen werden.

11. Verfahren gemäß einem der vorhergehenden Ansprüche,
**dadurch gekennzeichnet, dass**
ferner ein optisch und/oder akustisch wahrnehmbares weiteres Ausgabesignal erzeugt und ausgegeben wird.

12. Bediensystem mit
einer Erfassungseinheit (2, 3, 15), die einen Erfassungsbereich aufweist, in welchem eine Bedienhandlung eines Nutzers erfassbar ist;
einer Steuereinheit (6), durch die anhand der erfassten Bedienhandlung Rückmeldungsdaten erzeugbar sind; und
einer Rückmeldungsvorrichtung (7), an welche die Rückmeldungsdaten übertragbar sind; wobei
die Rückmeldungsvorrichtung (7) einen Übertragungsbereich aufweist, in dem anhand der Rückmeldungsdaten ein haptisch wahrnehmbares Ausgabesignal ausgebbar ist; wobei
der Übertragungsbereich und der Erfassungsbereich voneinander beabstandet angeordnet sind,
**dadurch gekennzeichnet, dass**
die erfasste Bedienhandlung ein Eintreten eines Betätigungsobjekts in einen Annäherungsbereich umfasst, wobei der Annäherungsbereich einen Raum in einer Umgebung eines Bedienelements umfasst.

13. Bediensystem gemäß Anspruch 12
**dadurch gekennzeichnet, dass**
die Erfassungseinheit (2, 3, 15) eine berührungsempfindliche Oberfläche (2) oder eine Einrichtung (3) zur Detektion elektromagnetischer Wellen umfasst.

14. Fahrzeug (1) mit einem Bediensystem gemäß Anspruch 12 oder 13.

15. Fahrzeug (1) gemäß Anspruch 14,
**dadurch gekennzeichnet, dass**
die Erfassungseinheit (2, 3, 15) von dem Fahrzeug (1) umfasst ist und die Rückmeldungsvorrichtung (7) von einem mobilen Nutzergerät umfasst ist.

## Claims

1. Method for operating a control system, in which
a control action of a user is sensed in a sensing range of a sensing unit (2, 3, 15);
feedback data are generated on the basis of the sensed control action and transmitted to a feedback device (7); and
a haptically perceptible output signal is output in a transmission range by the feedback device (7) on the basis of the feedback data;
wherein
the transmission range and the sensing range are arranged spaced apart from one another, **characterized in that**
the sensed control action comprises the entering of an activation object into an approach range, wherein the approach range comprises a space in the surroundings of a control element.

2. Method according to Claim 1,
**characterized in that**
the control action is sensed by means of a touch-sensitive surface (2) and/or a camera (3).

3. Method according to one of the preceding claims,
**characterized in that**
the sensed control action comprises a tapping gesture, a wiping gesture or a pointing gesture.

4. Method according to one of the preceding claims,
**characterized in that**
the control action comprises at least one gesture section which is executed in a three-dimensional space.

5. Method according to one of the preceding claims,
**characterized in that**
a control surface is also displayed by means of a display unit (4), and the control action is sensed with respect to the displayed control surface.

6. Method according to one of the preceding claims,
**characterized in that**
the haptically perceptible output signal comprises vibration at a frequency and with an amplitude and a duration.

7. Method according to one of the preceding claims,
**characterized in that**
the feedback device (7) is arranged spaced apart from the sensing unit (2, 3, 15) and on the user's body.

8. Method according to Claim 7,
**characterized in that**
the feedback device (7) is attached to an arm, in particular in the region of a user's wrist.

9. Method according to one of the preceding claims,
**characterized in that**
the feedback data comprise a first or a second feedback type; and
the output signal is formed as a function of the feedback type.

10. Method according to one of the preceding claims,
**characterized in that**
the feedback data are transmitted to the feedback device (7) via a communication unit (8).

11. Method according to one of the preceding claims,
**characterized in that**
a visually and/or acoustically perceptible further output signal is also generated and output.

12. Control system having
a sensing unit (2, 3, 15) which has a sensing range in which a control action of a user can be sensed;
a control unit (6) which can generate feedback data on the basis of the sensed control action; and
a feedback device (7) to which the feedback data can be transmitted; wherein
the feedback device (7) has a transmission range in which a haptically perceptible output signal can be output on the basis of the feedback data; wherein
the transmission range and the sensing range are arranged spaced apart from one another, **characterized in that**
the sensed control action comprises the entering of an activation object into an approach range, wherein the approach range comprises a space in the surroundings of a control element.

13. Control system according to Claim 12, ch
aracterized in that
the sensing unit (2, 3, 15) comprises a touch-sensitive surface (2) or a device (3) for detecting electromagnetic waves.

14. Vehicle (1) having a control system according to Claim 12 or 13.

15. Vehicle (1) according to Claim 14,
**characterized in that**
the sensing unit (2, 3, 15) is encompassed by the vehicle (1), and the feedback device (7) is encompassed by a mobile user device.

## Revendications

1. Procédé pour faire fonctionner un système de commande, avec lequel
une manipulation de commande d'un utilisateur est détectée dans une zone de détection d'une unité de détection (2, 3, 15) ;
des données de rétrosignalement sont générées à l'aide de la manipulation de commande détectée puis transmises à un dispositif de rétrosignalement (7) ; et
un signal de sortie perceptible de manière haptique est délivré dans une zone de transmission par le dispositif de rétrosignalement (7) à l'aide des données de rétrosignalement ;
la zone de transmission et la zone de détection étant disposées espacées l'une de l'autre,
**caractérisé en ce que**
la manipulation de commande détectée comprend une pénétration d'un objet d'actionnement dans une zone d'approche, la zone d'approche comprenant un espace dans un environnement d'un élément de commande.

2. Procédé selon la revendication 1, **caractérisé en ce que** la manipulation de commande est détectée au moyen d'une surface sensible au contact (2) et/ou d'une caméra (3) .

3. Procédé selon l'une des revendications précédentes, **caractérisé en ce que** la manipulation de commande détectée comprend un geste de tapotage, un geste de balayage ou un geste de pointage.

4. Procédé selon l'une des revendications précédentes, **caractérisé en ce que** la manipulation de commande comprend au moins une portion de geste qui est accomplie dans un espace tridimensionnel.

5. Procédé selon l'une des revendications précédentes, **caractérisé en ce qu'**une interface utilisateur est en outre affichée par une unité d'affichage (4) et la manipulation de commande est détectée en référence à l'interface utilisateur affichée.

6. Procédé selon l'une des revendications précédentes, **caractérisé en ce que** le signal de sortie perceptible de manière haptique comprend une vibration avec une fréquence, une amplitude et une durée.

7. Procédé selon l'une des revendications précédentes, **caractérisé en ce que** le dispositif de rétrosignalement (7) est disposé espacé de l'unité de détection (2, 3, 15) et au niveau du corps de l'utilisateur.

8. Procédé selon la revendication 7, **caractérisé en ce que** le dispositif de rétrosignalement (7) est fixé à un bras, notamment dans la zone d'un poignet, de l'utilisateur.

9. Procédé selon l'une des revendications précédentes, **caractérisé en ce que**
les données de rétrosignalement comprennent un premier ou un deuxième type de rétrosignalement ; et
le signal de sortie est formé en fonction du type de rétrosignalement.

10. Procédé selon l'une des revendications précédentes, **caractérisé en ce que** les données de rétrosignalement sont transmises au dispositif de rétrosignalement (7) par le biais d'une unité de communication (8).

11. Procédé selon l'une des revendications précédentes, **caractérisé en ce qu'**un signal de sortie supplémentaire, perceptible de manière visuelle et/ou sonore, est en plus généré et délivré.

12. Système de commande, comprenant
une unité de détection (2, 3, 15), qui possède une zone de détection dans laquelle peut être détectée une manipulation de commande d'un utilisateur ;
une unité de commande (6) par laquelle peuvent être générées des données de rétrosignalement à l'aide de la manipulation de commande détectée ; et
un dispositif de rétrosignalement (7) auquel peuvent être transmises les données de rétrosignalement ;
le dispositif de rétrosignalement (7) possédant une zone de transmission dans laquelle un signal de sortie perceptible de manière haptique peut être délivré à l'aide des données de rétrosignalement ;
la zone de transmission et la zone de détection étant disposées espacées l'une de l'autre,
**caractérisé en ce que**
la manipulation de commande détectée comprend une pénétration d'un objet d'actionnement dans une zone d'approche, la zone d'approche comprenant un espace dans un environnement d'un élément de commande.

13. Système de commande selon la revendication 12, **caractérisé en ce que** l'unité de détection (2, 3, 15) comprend une surface sensible au contact (2) ou un équipement (3) destiné à la détection d'ondes électromagnétiques.

14. Véhicule (1) équipé d'un système de commande selon l'une des revendications 12 et 13.

15. Véhicule (1) selon la revendication 14, **caractérisé en ce que** l'unité de détection (2, 3, 15) est comprise dans le véhicule (1) et le dispositif de rétrosignalement (7) est compris dans un appareil d'utilisateur mobile.
